# EUROPEAN PATENT APPLICATION

(11) **EP 4 549 889 A1**
(43) Date of publication of application: **07.05.2025**
(21) Application number: 24210185.5
(22) Date of filing: 31.10.2024
(51) Int. Cl.: G01G 23/01

(54) **APPARATUS FOR CALIBRATING A WEIGHING DEVICE**

(30) Priority: 31.10.2023 GB 202316622
(71) Applicant: Eilersen Calibration Solutions ApS, 2980 Kokkedal (DK)
(72) Inventor: O'Reilly, John, Mullingar, N91EH72 (IE); Eilersen, Frederik Juul, 2980 Kokkedal (DK); Schlicker, Sebastian Mejlvang, 2980 Kokkedal (DK)
(74) Representative: Dragsted Partners A/S

(57) **Abstract**

An apparatus for calibrating a weighing device, said apparatus comprising at a first upright support pillar, at a first transversely extending member mounted in connection with the first upright support pillar, the first transversely extending member being configured to be vertically moveable thereon such that the first transversely extending member can be brought to rest on a part of a weighing device located adjacent the first support pillar, and a load measuring device configured to measure a load applied to the weighing device by said first transversely extending member, such that the load measured by said load measuring device can be compared to the load applied to the weighing device as recorded by the integrated weighing system of the weighing device in order to calibrate the weighing device.

## Description

### Technical Field

This invention relates to an apparatus for calibrating a weighing system of a tote of the type having an integrated weighing system providing an accurate measure of the weight of contents of the tote.

### Description

In the pharmaceutical industry, containers, known as totes, are used for the storage, mixing and transport of bioprocessing liquids in a cleanroom environment. The liquids are typically held in one or more tanks provided within the tote or, more commonly, in single use bags located within one or more compartments within the tote. Such totes are frequently mounted on wheels for mobility and typically include an integrated weighing system to provide an accurate measure of the weight of the contents of the tote. Such weighing system can be used during the addition and mixing of bioprocessing liquids into the or each bag or tank of the tote.

Due to the need for very precise accuracy when mixing the ingredients of pharmaceutical preparations, it is necessary to carry out frequent calibration of the weighing system of each tote to verify its accuracy and correct any faults or errors. This is traditionally done by loading the tote to be calibrated with a bag containing a known weight of a test liquid to verify the accuracy of the weighing system. However, this a time consuming and labour-intensive process that is prone to error.

An object of the present invention is to provide a quicker and more reliable system for calibrating the weighing system of a tote.

According to the present invention there is provided an apparatus for calibrating a weighing device, said apparatus comprising: at a first upright support pillar, at a first transversely extending member mounted in connection with the first upright support pillar, the first transversely extending member being configured to be vertically moveable thereon such that the first transversely extending member can be brought to rest on a part of a weighing device located adjacent the first support pillar, and a load measuring device configured to measure a load applied to the tote by said first transversely extending member, such that the load measured by said load measuring device can be compared to the load applied to the tote as recorded by the integrated weighing system of the weighing device in order to calibrate the weighing device. Means may be provided for increasing the load applied to the tote by said first transversely extending member once it has been placed in contact with the tote. Said means for increasing the load applied to the tote may comprise an actuator, such as a hydraulic ram or jack, acting between the first support pillar and the first transversely extending member to push the first transversely extending member downwardly against the tote. Alternatively, the actuator may be pneumatically or electrically operated.

Within the understanding of the present invention, the term tote may be replaced by a weighing device, or may alternatively be replaced by a mobile weighing device, where the weighing device may have a receptacle or a container to hold a load. The weighing device or the tote may be in the form of mobile vessels, mobile mixers, mobile bioreactors and/or mobile bag holders. The weighing device may have a receptacle, container or any kind of device to to hold a load, and where the receptacle and/or container may have one or more load cells to measure the load that is present in the receptacle. The load cell may be positioned between a base of the weighing device and the receptacle, so that the load cell registers the force applied by the receptacle to the base, and may optionally display the load via a user interface or electrical means.

Preferably the first transversely extending member is coupled to the first support pillar via a lifting means to permit the first transversely extending member to be raised to allow a tote to be moved into a position under the first transversely extending member, and subsequently lowered to be brought into contact with an upper surface of the tote. The lifting means may be manually operable via an operating handle on an outer side of said first pillar or may be electrically operated.

In one embodiment, a pair of upright support pillars may be provided, located at a spacing to allow a tote to be located between the support pillars, said first transversely extending member being mounted on said pillars to extend therebetween. The first transversely extending member may comprise a pair of horizontally arranged beams extending between and supported on said pillars, said beams extending parallel to one another and being horizontally spaced apart from one another, whereby said beams are located to apply an evenly distributed load on the tote.

Preferably, the load measuring device includes a display for displaying the load applied to the tote by said first transversely extending member. The display may be provided on an outer side of said first pillar.

### Brief Description of the drawings

An apparatus, in the form of a calibration station, for calibrating the weighing system of a tote in accordance with an embodiment of the present invention will now be described, by way of example only, with reference to the following figures where:
Fig 1, shows a perspective view of the calibration station alongside a tote to be calibrated,
Fig. 2 shows a front schematic view of an embodiment of an apparatus for calibrating a weighing device,
Fig. 3 shows a front schematic view of a second embodiment of an apparatus for calibrating a weighing device, and
Fig. 4 shows front schematic view of an embodiment of a third embodiment for calibrating a weighing device.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

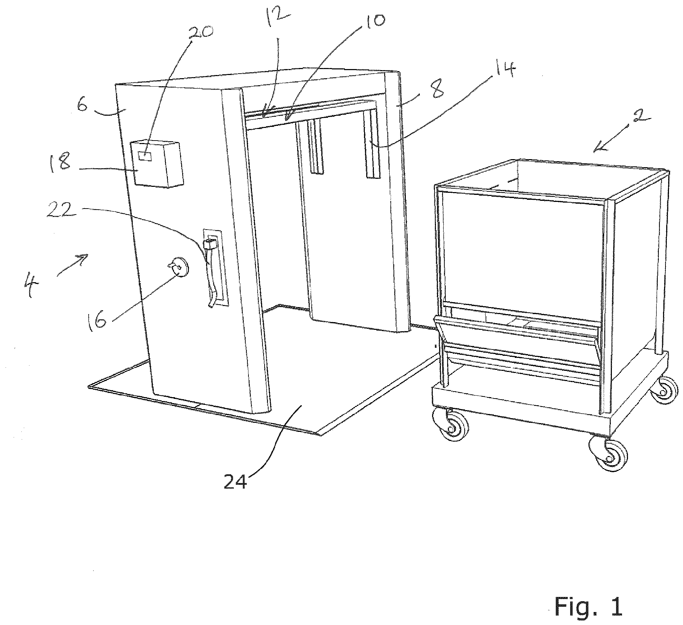

As illustrated in Fig. 1, a calibration station 4 for checking the accuracy of a weighing system of a tote 2 in accordance with an embodiment of the present invention comprises a pair of upright support pillars 6,8 fixed to the floor (not shown) or onto a base plate 24 and located at a spacing sufficient to allow the largest tote to be tested to pass therebetween.

Extending between the pillars 6,8 are a pair of load applying beams 10,12 arranged parallel to one another, the beams 10,12 being mounted to the pillars 6,8 to be vertically movable thereon via a lifting mechanism 14 adapted to move the beams 10,12 vertically up and down the pillars 6,8 between a raised position, as shown in Fig. 1, of sufficient height to allow the largest tote to be tested to be moved into a position between the pillars 6,8 and underneath the beams 10,12, the lifting mechanism 14 being operable to lower the beams 10,12 into contact with an upper surface of the tote 2. The beams 10,12 are horizontally spaced apart to distribute the load applied to the tote 2 by the beams 10,12 evenly over the length of the tote 2.

The beams 10,12 may be raised and lowered by means of the lifting mechanism, operated by manipulation of an operating handle 16 provided on an outer side of one of the pillars 6. A bridge 15 extends between the upper ends of the pillars 6,8 adjacent the upper ends thereof to provide greater stability and to define a housing for a portion of the lifting mechanism extending between the pillars and adapted to ensure that the beams 10,12 remain horizontal and aligned with one another during raising and lowering under the action of the lifting mechanism 14.

The calibration station 4 incorporates a load measuring system 18, said load measuring system 18 being adapted to measure a load applied to the tote 2 by the beams 10,12, and having a display 20 for displaying the measured load. This enables the load measured by said load measuring system 18 to be compared to the load applied to the tote as recorded by the integrated weighing system of the tote to check the calibration/accuracy of the weighing system of the tote.

A load applying mechanism is be provided, acting between the pillars 6,8 and the beams 10,12, for increasing the load applied to the tote 2 via the beams 10,12, an operating handle 22 being provided on an outer side of one of the pillars 6 for operating such load applying mechanism. The load applying mechanism may comprise a hydraulic or pneumatic ram or jack. Alternatively it is envisaged that the load applying system may be operated electrically.

In use, with the beams 10,12 raised to their uppermost position on the pillars 6,8, a tote 2 to be calibrated is moved into the space between the pillars 6,8, beneath the beams 6,8 and the operating handle 16 of the lifting mechanism 14 is operated to lower the beams 10,12 until they are in contact with an upper surface of the tote 2.

The operating handle 22 of the load applying mechanism is then operated to apply a desired load to the tote 2 via the beams 10,12. The reading on the display 20 of the load measuring system 18 can then be compared to the reading of the weighing system of the tote 2 to determine the accuracy of the weighing system. Any discrepancy between the two readings indicates a fault with the weighing system of the tote 2 that will require attention before the tote can be used.

The calibration station in accordance with the present invention provides a quick and reliable means for verifying the accuracy of the weighing system of a tote and identifying faults or a requirement for recalibration of the weighing system.

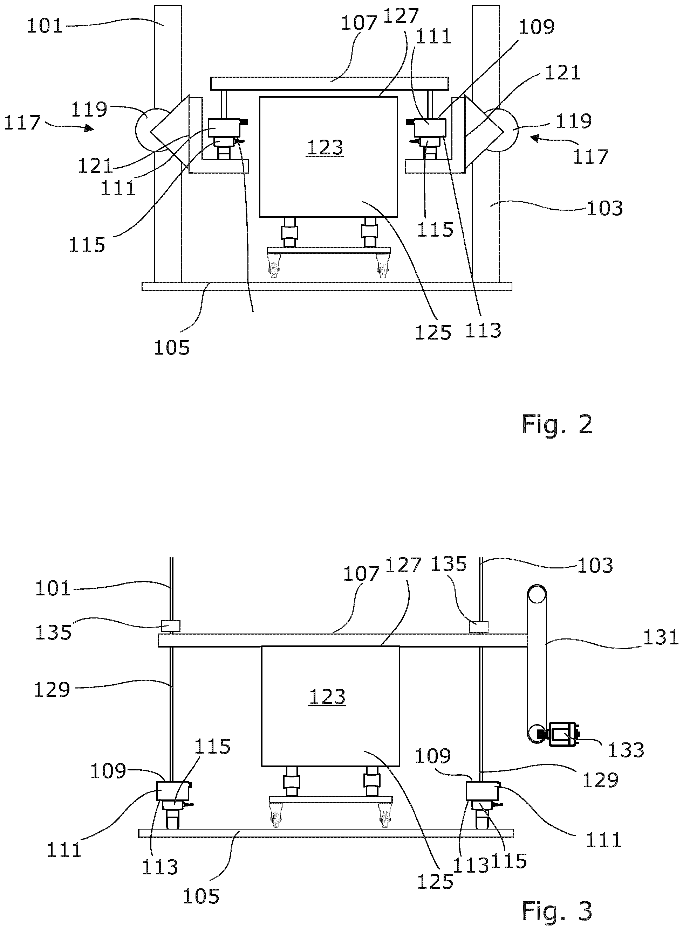

Fig. 2 shows an embodiment of an apparatus having a first pillar 101 and a second pillar 103, where the first pillar 101 and the second pillar are attached to a base 105 providing a counterforce for the calibration apparatus, where a transversely extending member 107 is attached to a top side 109 of at least one hydraulic force unit 111, and the bottom side 113 of the hydraulic force unit 111 is connected to a load cell 115 and a system 117 allowing height adjustments, such as a rack 119 and pinion 121.

The transversely extending member 107 may be movable in a vertical direction either manually or by actuators until coming into contact with a top side 127 of a container 123 of a weighing device 125. After coming into contact with the container 123, the system allowing height adjustment may be locked relative to the first pillar 101 or the second pillar 103 to prevent further movement, after which the hydraulic force unit 111 will provide a measurable downwards force on the container 123 in place, by use of a hydraulic pumping device (not shown).

Fig. 3 shows another embodiment, where the transversely extending member 107 slides on a rod 129 connected to the top 109 of the force unit 111. The bottom 113 of the force unit 111 is connected to the floor 105 or a base 105 via a load cell 115. The rod 129 and the force unit 111 may be seen as the first pillar 101 and the second pillar 103.

The transversely extending member 107 may be adjusted in height using a system such as timing belts and pulleys either 131 manually or by actuators 133 until coming into contact with the top of a container 123 of a weighing device 125.

After coming into contact with the container 123, the system allowing height adjustment may be locked manually or automatically using a locking mechanism 135 to prevent further movement. Hereafter, a hydraulic force unit will provide a measurable downwards force on the container 123 in place, operated by a hydraulic pumping device (not shown).

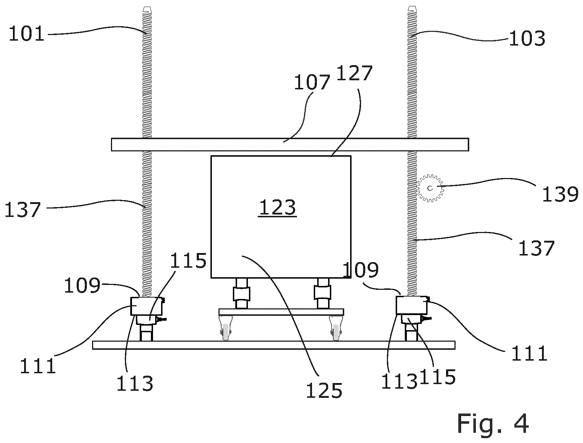

Fig. 4 shows a third embodiment, where the transversely extending member 107 is connected to a precision ball screw 137 attached to the top part 109 of a hydraulic cylinder of a force unit 111, where one force unit 111 and one precision ball screws may constitute the first pillar 101 and a second force unit 111 and a second precision ball screw may constitute the second pillar 103. The transversely extending member 107 may have an inner thread (not shown) which interacts with an outer thread of the precision ball screw 137. The bottom 113 of the force unit 111 is connected to the floor 105 or the base 105. Using an actuated worm gear 139, or any kind of rotational actuation mechanism, the ball screw 137 can be rotated along its rotational axis to move the transversely extending member 107 up and downwards until coming in contact with the top surface 127 of the container 123. Both precision ball screws of the first pillar 101 and the second pillar 103 may be rotated in synchronization or individually. After coming into contact with the container 123, the system allowing height adjustment may be locked manually or automatically to prevent further movement. Hereafter, the hydraulic force unit 111 will provide a measurable downward force on the container 123 in place, operated by a hydraulic pumping device (not shown).

The invention is not limited to the embodiment described herein but can be amended or modified without departing from the scope of the present invention as defined by the appended claims.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### Items

1. An apparatus for calibrating a weighing system of a tote, said apparatus comprising at least one upright support pillar, at least one transversely extending member mounted on the at least one support pillar to be vertically moveable thereon such that the at least one transversely extending member can be brought to rest on a tote located adjacent the at least one support pillar, and a load measuring device adapted to measure a load applied to the tote by said at least one transversely extending member, such that the load measured by said load measuring device can be compared to the load applied to the tote as recorded by the integrated weighing system of the tote to check the calibration of the weighing system of the tote.
2. An apparatus in accordance with item 1, further comprising means for increasing the load applied to the tote by said at least one transversely extending member once it has been placed in contact with the tote.
3. An apparatus in accordance with item 2, wherein said means for increasing the load applied to the tote comprises an actuator acting between the at least one support pillar and the at least one transversely extending member to push the at least on transversely extending member downwardly against the tote.
4. An apparatus in accordance with item 3, wherein said actuator for increasing the load applied to the tote comprises a hydraulic ram.
5. An apparatus in accordance with any preceding item, wherein the at least one transversely extending member is coupled to the at least one support pillar via a lifting means to permit the at least one transversely extending member to be raised to allow a tote to be moved into a position under the at least one transversely extending member, and subsequently lowered to be brought into contact with an upper surface of the tote.
6. An apparatus in accordance with item 5, wherein said lifting means is manually operable via an operating handle on an outer side of said at least one pillar.
7. An apparatus in accordance with any preceding item, comprising a pair of upright support pillars located at a spacing to allow a tote to be located between the support pillars, located at a spacing to allow a tote to be located between the support pillars, said at least one transversely extending member being mounted on said pillars to extend therebetween.
8. An apparatus in accordance with item 7, wherein said at least one transversely extending member comprises a pair of horizontally arranged beams extending between and supported on said pillars, said beams extending parallel to one another and being horizontally spaced apart from one another, whereby said beams are located to apply an evenly distributed load on the tote.
9. An apparatus in accordance with any preceding item, wherein said load measuring device includes a display for displaying the load applied to the tote by said at least one transversely extending member.
10. An apparatus in accordance with item 9, wherein said display is provided on an outer side of said at least one pillar.

## Claims

1. An apparatus for calibrating a weighing device, said apparatus comprising
- at a first upright support pillar,
- at a first transversely extending member mounted in connection with the first upright support pillar, the first transversely extending member being configured to be vertically moveable thereon such that the first transversely extending member can be brought to rest on a part of a weighing device located adjacent the first support pillar, and
- a load measuring device configured to measure a load applied to the weighing device by said first transversely extending member, such that the load measured by said load measuring device can be compared to the load applied to the weighing device as recorded by the integrated weighing system of the weighing device in order to calibrate the weighing device.

2. An apparatus as claimed in claim 1, further comprising means for increasing the load applied to the weighing device by said first transversely extending member once it has been placed in contact with the weighing device.

3. An apparatus as claimed in claim 2, wherein said means for increasing the load applied to the weighing device comprises an actuator acting between the first support pillar and the first transversely extending member to push the first transversely extending member downwardly against the weighing device.

4. An apparatus as claimed in claim 3, wherein said actuator for increasing the load applied to the weighing device comprises a hydraulic ram.

5. An apparatus as claimed in any preceding claim, wherein the at first transversely extending member is coupled to the first support pillar via a lifting means to permit the first transversely extending member to be raised to allow a weighing device to be moved into a position under the first transversely extending member, and subsequently lowered to be brought into contact with an upper surface of the weighing device.

6. An apparatus as claimed in claim 5, wherein said lifting means is manually operable via an operating handle on an outer side of said first pillar.

7. An apparatus as claimed in any preceding claim, comprising a second upright support pillar positioned relative to the first upright support pillar to provide a spacing to allow weighing device to be located between the support pillars, located at a spacing to allow a weighing device to be located between the support pillars, said first transversely extending member being mounted on said pillars to extend therebetween.

8. An apparatus as claimed in claim 7, wherein said first transversely extending member comprises a first and a second horizontally arranged beams extending between and supported on said first and second pillars, said beams extending parallel to one another and being horizontally spaced apart from one another, whereby said beams are located to apply an evenly distributed load on the weighing device.

9. An apparatus as claimed in any preceding claim, wherein said load measuring device includes a display for displaying the load applied to the weighing device by said first transversely extending member.

10. An apparatus as claimed in claim 9, wherein said display is provided on an outer side of said first pillar.
